# EUROPÄISCHE PATENTSCHRIFT

(11) **EP 3 120 078 B1**
(45) Veröffentlichungstag und Bekanntmachung des Hinweises auf die Patenterteilung: **31.10.2018**
(21) Anmeldenummer: 15716722.2
(22) Anmeldetag: 11.03.2015
(51) Int. Cl.: F23D 5/12, F23D 5/04, F23D 3/40

(54) **VERDAMPFERBRENNER FÜR EIN MOBILES, MIT FLÜSSIGEM BRENNSTOFF BETRIEBENES HEIZGERÄT**
VAPORIZATION BURNER FOR A MOBILE LIQUID FUEL HEATING DEVICE
BRÛLEUR À VAPORISATION POUR UN DISPOSITIF DE CHAUFFAGE MOBILE À COMBUSTIBLE LIQUIDE

(30) Priorität: 20.03.2014 DE 102014103817
(43) Veröffentlichungstag der Anmeldung: 25.01.2017
(73) Patentinhaber: Webasto SE, 82131 Stockdorf (DE)
(72) Erfinder: DELL, Vitali, 82131 Stockdorf (DE); MÖSL, Klaus, 82131 Stockdorf (DE); SOMMERER, Stefan, 82131 Stockdorf (DE); KERSCHER, Thomas, 82131 Stockdorf (DE)
(74) Vertreter: Ciesla, Bettina
(86) Internationale Anmeldenummer: PCT/DE2015/100102
(87) Internationale Veröffentlichungsnummer: WO 2015/139686

(56) Entgegenhaltungen:
- WO-A1-2015/014338
- DE-A1- 4 304 057
- DE-A1- 19 529 994
- DE-B4- 4 447 987
- DE-C1- 10 200 524
- JP-A- 2003 042 409
- US-A- 5 616 021

## Beschreibung

Die vorliegende Erfindung betrifft einen Verdampferbrenner für eine mobiles, mit flüssigem Brennstoff betriebenes Heizgerät sowie ein Fahrzeugheizgerät mit einem solchen Verdampferbrenner.

In mobilen, mit flüssigem Brennstoff betriebenen Heizgeräten kommen häufig Verdampferbrenner zum Einsatz, bei denen der flüssige Brennstoff verdampft wird, der verdampfte Brennstoff mit zugeführter Brennluft zu einem Brennstoff-Luft-Gemisch vermischt und anschließend unter Freisetzung von Wärme umgesetzt wird.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc. Insbesondere kann das mobile Heizgerät als Stand- oder Zuheizer für ein Landfahrzeug, wie beispielsweise für einen Wohnwagen, ein Wohnmobil, einen Bus, einen Pkw, etc., ausgelegt sein.

Im Hinblick auf Umweltgesichtspunkte und die diesbezügliche Gesetzgebung in vielen Ländern wird es immer wichtiger, die Abgasemissionen von mobilen Heizgeräten zu minimieren. Insbesondere bei Verdampferbrennern für mobile Heizgeräte besteht dabei die Schwierigkeit, dass ein Betrieb unter unterschiedlichen äußeren Randbedingungen und in verschiedenen Heizleistungsstufen jeweils möglichst effizient und mit geringen Abgasemissionen erfolgen soll.

Die nachveröffentlichte WO 2015/014338 A1 beschreibt eine Brenneranordnung für ein Heizgerät mit einer Brennkammer und einer der Brennkammer strömungstechnisch vorgeordneten Vormischkammer.

DE 44 47 987 B4 beschreibt eine Brennkammer eines Brenners für ein Fahrzeugheizgerät, die eine Stirn-Begrenzungswand, eine Umfangs-Begrenzungswand, einen Stutzen zur Unterbringung einer Glühkerze und einen Stutzen zur Zuführung von Verbrennungsluft aufweist, der von der Stirn-Begrenzungswand in die Brennkammer ragt und Verbrennungsluftaustritte durch die Stutzenwand aufweist.

DE 195 29 994 A1 beschreibt einen Verdampferbrenner für ein Heizgerät mit Brennkammer mit einer Umfangs-Begrenzungswand, einer Stirn-Begrenzungswand, einem koaxial in die Brennkammer hineinragenden Luftzuführungsstutzen mit radialen Luftaustritten hat.

Der Luftzuführungsstutzen hat eine Abschlussblende für eine axiale Rückströmung von Abgas.

DE 43 04 057 A1 beschreibt einen Heizkessel, bei dem der Brennerflamme im Bereich des Flammenmundes ein Teil der Rauchgasmenge rezirkulierend zugeführt wird. Dokumente US 5 616 021 und DE 10 2011 087 971 offenbaren einen Verdampferbrenner für ein mobiles, mit flüssigem Brennstoff betriebenes Heizgerät nach dem Oberbegriff des Anspruchs 1.

Es ist Aufgabe der vorliegenden Erfindung, einen verbesserten Verdampferbrenner für ein mobiles, mit flüssigem Brennstoff betriebenes Heizgerät und ein verbessertes Fahrzeugheizgerät mit einem solchen Verdampferbrenner bereitzustellen, die insbesondere unter unterschiedlichen äußeren Betriebsbedingungen einen Betrieb mit sehr geringen Emissionen ermöglichen.

Die Aufgabe wird durch einen Verdampferbrenner für ein mobiles, mit flüssigem Brennstoff betriebenes Heizgerät nach Anspruch 1 gelöst. Vorteilhafte Weiterbildungen sind in den abhängigen Ansprüchen angegeben.

Unter einem Gemischaufbereitungsbereich ist dabei ein Bereich des Verdampferbrenners zu verstehen, in dem im normalen Heizbetrieb des Verdampferbrenners eine Durchmischung von verdampftem Brennstoff mit Brennluft erfolgt, aber keine Flamme ausgebildet ist. In dem Gemischaufbereitungsbereich kann eine vorteilhafte Aufbereitung des Brennstoff-Luft-Gemisches vor dessen Umsetzung in dem Umsetzungsbereich erfolgen. In dem Umsetzungsbereich kann insbesondere eine Umsetzung in einer flammenden Verbrennung erfolgen, es ist jedoch z.B. auch eine Umsetzung in einer teil- oder vollkatalytischen Reaktion möglich. Durch die Abgasrückführung zum Rückführen von Verbrennungsabgasen in den Gemischaufbereitungsbereich können Emissionen von Stickoxiden (NOₓ) besonders zuverlässig reduziert werden. Dabei wird die Wärme der Verbrennungsabgase sowohl zur Unterstützung des Verdampfungsprozesses als auch zur Erwärmung des Brennstoff-Luft-Gemisches genutzt. Die Brennstoffaufnahmefähigkeit der zugeführten Brennluft wird durch eine Erhöhung des Sättigungsdampfdrucks des Brennstoffs - d.h. der Partialdruck des Brennstoffs, bei dem die Sättigung der Gasphase mit dem Brennstoff erreicht wird - erhöht, was sich insbesondere bei niedrigen Außentemperaturen und damit einem niedrigen Temperaturniveau der zugeführten Brennluft vorteilhaft auswirkt. In dieser Weise wird ein erhöhter Gesamtwirkungsgrad des Verdampferbrenners erreicht. Die in den Gemischaufbereitungsbereich rückgeführten Verbrennungsabgase wirken als inerter Ballast auf die Prozesse der Brennstoffverdampfung und der Verbrennung des Brennstoff-Luft-Gemisches. Dieser inerte Ballast wirkt durch eine Anhebung der latenten Wärme beschleunigend auf den Brennstoffverdampfungsprozess und bewirkt eine Erhöhung der Zündverzugszeit, wodurch eine verbesserte Durchmischung des Brennstoff-Luft-Gemisches erreicht wird.

Bevorzugt weist die Abgasrückführung zumindest eine in den Gemischaufbereitungsbereich mündende Abgasauslassöffnung auf, über die die Verbrennungsabgase gezielt in den Gemischaufbereitungsbereich zurückgeführt werden können.

Gemäß einer Weiterbildung weist der Gemischaufbereitungsbereich einen Verjüngungsbereich mit einem sich in Richtung des Umsetzungsbereichs verjüngenden Querschnitt und einen sich in Richtung des Umsetzungsbereichs an den Verjüngungsbereich anschließenden Übergangsabschnitt auf. Durch den Verjüngungsbereich können die Strömungsgeschwindigkeiten des Brennstoff-Luft-Gemisches vor dem Eintritt in den Umsetzungsbereich zuverlässig so stark erhöht werden, dass ein unerwünschtes Rückschlagen der Flamme in den Gemischaufbereitungsbereich verhindert wird. Über den Übergangsabschnitt kann dabei das Strömungsverhalten gezielt vorgegeben werden.

Bevorzugt ist die Abgasrückführung derart ausgelegt, dass sie dort in den Übergangsabschnitt mündet, wo aufgrund des dort herrschenden niedrigen statischen Drucks ein zuverlässiges Ansaugen von Verbrennungsabgasen ermöglicht ist.

Gemäß einer Weiterbildung ist an einem Übergang von dem Übergangsabschnitt zu dem Umsetzungsbereich eine abrupte Querschnittserweiterung des Strömungsraums ausgebildet. In diesem Fall wird insbesondere bei einer Zuführung der Brennluft mit einem starken Drall zu dem Gemischaufbereitungsbereich eine besondere Stabilisierung der Flamme in dem Umsetzungsbereich ermöglicht und es kann über einen großen Bereich verschiedener Heizleistungen, d.h. verschiedener Brennstoff- und Brennluft-Masseströme, eine schadstoffarme und stabile Verbrennung sichergestellt werden.

Es ist ein Axialkörper vorgesehen, der sich in dem Gemischaufbereitungsbereich entlang einer Längsachse des Verdampferbrenners beabstandet von einer Seitenwand erstreckt. Bevorzugt kann der Axialkörper eine im Wesentlichen zylindrische Form aufweisen. Durch den Axialkörper wird eine besonders vorteilhafte Strömungsführung in dem Gemischaufbereitungsbereich ermöglicht. Ferner kann der Axialkörper bevorzugt aus einem Material mit hoher Wärmeleitfähigkeit gefertigt sein, sodass Wärmeenergie von dem Verbrennungsprozess in dem Umsetzungsbereich durch Wärmeleitung über den Axialkörper zur Unterstützung der Verdampfung des flüssigen Brennstoffs und zur Unterstützung der Aufbereitung des Brennstoff-Luft-Gemischs gezielt in den Gemischaufbereitungsbereich zurückgeführt wird.

Wenn sich der Axialkörper von einer Stirnseite des Gemischaufbereitungsbereichs zumindest bis in den Übergangsabschnitt zu dem Umsetzungsbereich erstreckt, kann Wärme aus dem Umsetzungsbereich besonders gezielt über den Axialkörper in den Gemischaufbereitungsbereich rückgeführt werden.

Gemäß einer Weiterbildung ist die Verdampfungsoberfläche an einer Außenumfangsfläche des Axialkörpers ausgebildet. In diesem Fall kann die zugeführte Brennluft besonders gut entlang der Verdampfungsoberfläche geführt werden, sodass eine gute Durchmischung des verdampften Brennstoffs mit der zugeführten Brennluft erfolgt. Ferner kann in diesem Fall Wärme von dem Verbrennungsprozess in dem Umsetzungsbereich besonders gezielt über den Axialkörper dem Verdampfungsprozess in dem Gemischaufbereitungsbereich zugeführt werden.

Gemäß einer Weiterbildung ist die Verdampfungsoberfläche durch ein Verdampferelement bereitgestellt ist und an einem dem Umsetzungsbereich zugewandten Ende des Verdampferelements ist eine Abdeckung vorgesehen. In diesem Fall kann ein unkontrolliertes Austreten von Brennstoff an dem stirnseitigen Ende des Verdampferelements zuverlässig verhindert werden. Bevorzugt kann Abdeckung in radialer Richtung über einen Außenumfang des Verdampferelements hervorstehen.

Der Axialkörper weist einen inneren Hohlraum auf, der zu dem Umsetzungsbereich hin offen ist und von dem sich eine Abgasauslassöffnung zu dem Gemischaufbereitungsbereich erstreckt, sodass Verbrennungsabgase durch den Axialkörper zu dem Gemischaufbereitungsbereich rückführbar sind. Somit ist eine konstruktiv besonders einfache Ausgestaltung gegeben, bei der der Axialkörper auch für die Rückführung der Verbrennungsabgase in den Gemischaufbereitungsbereich genutzt wird. Der Verdampferbrenner kann daher in einer besonders kompakten Ausgestaltung realisiert werden. Bevorzugt kann die Abgasauslassöffnung in diesem Fall in der ersten Hälfte des Gemischaufbereitungsbereichs (bezogen auf die Hauptströmungsrichtung) angeordnet sein, insbesondere mehr bevorzugt im ersten Drittel des Gemischaufbereitungsbereichs, noch mehr bevorzugt im ersten Viertel oder sogar im ersten Fünftel des Gemischaufbereitungsbereichs.

Die Aufgabe wird auch durch ein Fahrzeugheizgerät mit einem zuvor beschriebenen Verdampferbrenner gelöst.

Weitere Vorteile und Weiterbildungen ergeben sich aus der nachfolgenden Beschreibung von Ausführungsbeispielen unter Bezugnahme auf die beiliegenden Zeichnungen.
- Fig. 1: ist eine schematische Darstellung eines ersten, nicht erfindungsgemäßen Verdampferbrenners.
- Fig. 2: ist eine schematische Darstellung eines Verdampferbrenners gemäß einer Ausführungsform.
- Fig. 3: ist eine schematische vergrößerte Darstellung eines Axialkörpers bei der Ausführungsform.
- Fig. 4: ist eine schematische Darstellung eines Verdampferbrenners gemäß einer weiteren, nicht erfindungsgemäßen Ausgestaltung.
- Fig. 5: ist eine schematische Detaildarstellung eines Übergangsabschnitts bei der weiteren, nicht erfindungsgemäßen Ausgestaltung.
- Fig. 6: ist eine schematische Darstellung einer ersten Abwandlung der Ausführungsform.
- Fig. 7: ist eine schematische Darstellung einer zweiten Abwandlung der Ausführungsform.
- Fig. 8: ist eine schematische Darstellung einer weiteren Abwandlung des in Fig. 3 dargestellten Axialkörpers.
- Fig. 9: a) bis i) sind schematische Darstellungen von Weiterbildungen der in Fig. 8 dargestellten weiteren Abwandlung.

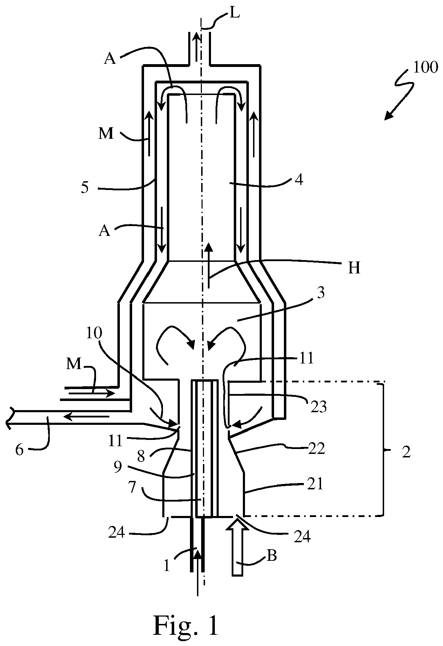

Eine erste, nicht erfindungsgemäße Ausgestaltung eines Verdampferbrenners wird im Folgenden unter Bezug auf die Fig. 1 beschrieben.

Der Verdampferbrenner 100 ist für ein mobiles, mit flüssigem Brennstoff betriebenes Heizgerät ausgebildet. Der Verdampferbrenner 100 ist dabei speziell für ein Fahrzeugheizgerät ausgelegt, insbesondere für eine Standheizung oder Zusatzheizung eines Kraftfahrzeugs.

Der Verdampferbrenner 100 erstreckt sich entlang einer Längsachse L. Der Verdampferbrenner 100 weist einen Gemischaufbereitungsbereich 2 auf, die eine Hauptkammer 21, einen an die Hauptkammer 21 anschließenden Verjüngungsbereich 22 und einen an den Verjüngungsbereich 22 anschließenden Übergangsabschnitt 23 aufweist. In dem Verjüngungsbereich 22 verjüngt sich der Querschnitt des Gemischaufbereitungsbereichs 2 in einer Hauptströmungsrichtung H, die im Wesentlichen parallel zu der Längsachse L verläuft. Bei dem schematisch dargestellten Beispiel ist beispielhaft eine konische Ausbildung des Verjüngungsbereichs 22 dargestellt, es sind jedoch auch andere Ausgestaltungen möglich. Der Übergangsabschnitt 23 bildet einen Übergang zu dem sich an den Gemischaufbereitungsbereich 2 anschließenden Umsetzungsbereich 3. Der Übergangsabschnitt 23 weist bei der Ausführungsform eine im Wesentlichen zylindrische Form mit einem konstanten Querschnitt auf.

An dem Übergang von dem Übergangsabschnitt 23 des Gemischaufbereitungsbereichs 2 zu dem Umsetzungsbereich 3 ist eine abrupte Querschnittserweiterung ausgebildet. Der für die in dem Verdampferbrenner 100 strömenden Gase zur Verfügung stehende Strömungsquerschnitt weitet sich an dem Übergang von dem Gemischaufbereitungsbereich 2 zu dem Umsetzungsbereich 3 somit abrupt auf.

In dem Umsetzungsbereich 3 findet bei dem konkreten Beispiel im Betrieb des Verdampferbrenners 100 eine Umsetzung eines Brennstoff-Luft-Gemischs in einer flammenden Verbrennung unter Freisetzung von Wärme statt. Die bei dieser Umsetzung entstehenden Verbrennungsabgase A strömen durch ein sich an den Umsetzungsbereich 3 anschließendes Brennrohr 4 in einen Wärmetauscher 5, in dem zumindest ein Teil der freigesetzten Wärme auf ein zu erwärmendes Medium M übertragen wird. Bei dem schematisch dargestellten Beispiel ist der Wärmetauscher 5 topfartig ausgebildet und die heißen Verbrennungsabgase A werden am Ende des Brennrohres 4 an dem Boden des Wärmetauschers 5 umgelenkt. Nach dem Umlenken strömen die Verbrennungsabgase A in einem zwischen einer Außenseite des Brennrohres 4 und einem Innenmantel des Wärmetauschers 5 ausgebildeten Strömungsraum zu einem Abgasauslass 6 ab.

Das zu erwärmende Medium M strömt in einem zwischen dem Innenmantel des Wärmetauschers 5 und einem Außenmantel des Wärmetauschers 5 gebildeten Strömungsraum, wie in Fig. 1 schematisch durch Pfeile dargestellt ist. Das zu erwärmende Medium M strömt dabei bei dem Beispiel entgegengesetzt zu der Strömungsrichtung der Verbrennungsabgase A in dem Wärmetauscher 5, um eine möglichst gute Wärmeübertragung zu erzielen. Das zu erwärmende Medium M kann dabei insbesondere z.B. durch zu erwärmende Luft oder durch eine zu erwärmende Flüssigkeit, insbesondere die Kühlflüssigkeit in einem Kühlflüssigkeitskreislauf eines Fahrzeugs gebildet sein. Der Innenmantel des Wärmetauschers 5 ist aus einem Material mit hoher Wärmeleitfähigkeit gefertigt, um eine gute Wärmeübertragung von den heißen Verbrennungsabgasen A auf das zu erwärmende Medium M zu gewährleisten.

Im Folgenden wird die Ausgestaltung des Gemischaufbereitungsbereichs 2 bei dem Beispiel eingehender beschrieben.

Der Verdampferbrenner 100 weist eine Brennstoffzuführung 1 zum Zuführen eines flüssigen Brennstoffs auf. Der flüssige Brennstoff kann dabei insbesondere durch einen Kraftstoff gebildet sein, der auch für den Betrieb eines Verbrennungsmotors des Fahrzeugs verwendet wird, insbesondere durch Benzin, Diesel, Ethanol oder Ähnliches. Die Brennstoffzuführung 1 ist in Fig. 1 lediglich schematisch durch eine Brennstoffzufuhrleitung und einen Pfeil dargestellt. Die Brennstoffzuführung 1 kann aber - in an sich bekannter Weise - auch eine Brennstofffördervorrichtung aufweisen, die insbesondere z.B. durch eine Brennstoffdosierpumpe gebildet sein kann. Die Brennstoffzuführung 1 ist dazu ausgebildet, in wohldefinierter Weise Brennstoff zu fördern und zu dosieren.

Die Brennstoffzuführung 1 mündet in dem Gemischaufbereitungsbereich 2. Bei dem schematisch dargestellten Beispiel mündet die Brennstoffzuführung 1 dabei an einer Stirnseite des Gemischaufbereitungsbereichs 2, die den Gemischaufbereitungsbereich 2 rückseitig verschließt. Seitlich ist der Gemischaufbereitungsbereich 2 durch eine Seitenwand begrenzt, die den Verlauf der Hauptkammer 21, des Verjüngungsbereichs 22 und des Übergangsabschnitts 23 bestimmt.

Es ist ferner eine Brennluftzuführung B vorgesehen, die in Fig. 1 lediglich schematisch durch einen Pfeil dargestellt ist. Die Brennluftzuführung B weist ein (nicht dargestelltes) Brennluftgebläse zum Fördern von Brennluft zu dem Gemischaufbereitungsbereich 2 auf. Der Gemischaufbereitungsbereich 2 weist eine Mehrzahl von Brennlufteintritten 24 auf, durch die die Brennluft in den Gemischaufbereitungsbereich 2 eintreten kann. Bei dem Beispiel wird die Brennluft mit einem großen Drall, d.h. mit einer großen tangentialen Strömungskomponente in den Gemischaufbereitungsbereich 2 eingeleitet. Der Drall kann der Brennluft dabei z.B. über entsprechend ausgerichtete Leitschaufeln oder Ähnliches aufgeprägt werden. Obwohl in Fig. 1 schematisch eine Anordnung dargestellt ist, bei der die Brennlufteintritte 24 radial außenliegend an der Stirnseite des Gemischaufbereitungsbereichs 2 angeordnet sind, sind auch andere Anordnungen möglich. Z.B. können die Brennlufteintritte auch seitlich an der Seitenwand des Gemischaufbereitungsbereichs 2 angeordnet sein.

Bei dem Beispiel ist in dem Gemischaufbereitungsbereich 2 ein Axialkörper 7 angeordnet, der sich ausgehend von der Stirnseite des Gemischaufbereitungsbereichs 2 beabstandet zu der Seitenwand des Gemischaufbereitungsbereichs 2 entlang der Längsachse L erstreckt. Der Axialkörper 7 ist bei dem Beispiel stabförmig bzw. turmförmig ausgebildet. Der Axialkörper 7 weist eine im Wesentlichen zylindrische Form auf und erstreckt sich bei dem Beispiel durch die Hauptkammer 21, den Verjüngungsbereich 22 und den Übergangsabschnitt 23. Der Axialkörper 7 ist im Wesentlichen mittig bezüglich seiner radialen Ausrichtung in dem Gemischaufbereitungsbereich 2 angeordnet. Der Axialkörper 7 weist eine Außenumfangsoberfläche auf, an der eine Verdampfungsoberfläche 8 zum Verdampfen von zugeführtem flüssigem Brennstoff ausgebildet ist. Bei dem Beispiel wird die Verdampfungsoberfläche 8 durch ein poröses, saugfähiges Verdampferelement 9 bereitgestellt, das an der Außenumfangsoberfläche des Axialkörpers 7 angeordnet ist. Das Verdampferelement 9 kann dabei insbesondere ein Metallvlies, eine Metallgewebe, einen metallischen oder keramischen Sinterkörper oder Ähnliches aufweisen. Bevorzugt kann das Verdampferelement 9 den Axialkörper 7 dabei über dessen ganzen Außenumfang umgreifen.

Obwohl in Fig. 1 schematisch eine Realisierung dargestellt ist, bei der sich das Verdampferelement 9 im Wesentlichen über die gesamte axiale Länge des Axialkörpers 7 erstreckt, ist es z.B. auch möglich, dass sich das Verdampferelement 9 nur über einen Teilbereich des Axialkörpers 7 erstreckt. Obwohl unter Bezug auf Fig. 1 lediglich ein Beispiel beschrieben ist, bei der die Verdampfungsoberfläche 8 durch ein solches Verdampferelement 9 bereitgestellt wird, sind auch Ausgestaltungen möglich, bei denen die Außenumfangsoberfläche des Axialkörpers 7 selbst als Verdampfungsoberfläche 8 ausgebildet ist.

Der zugeführte flüssige Brennstoff wird an der Stirnseite des Gemischaufbereitungsbereichs 2 an das Verdampferelement 9 übergeben, in dem eine Verteilung des flüssigen Brennstoffs erfolgt. Aufgrund der porösen, saugfähigen Ausgestaltung des Verdampferelements 9 verteilt sich der flüssige Brennstoff dabei sowohl in der Umfangsrichtung des Axialkörpers 7 als auch in der axialen Richtung des Axialkörpers 7. Ausgehend von der Verdampfungsoberfläche 8 verdampft der zugeführte flüssige Brennstoff und wird in dem Gemischaufbereitungsbereich 2 mit der zugeführten Brennluft vermischt, die entlang der Verdampfungsoberfläche 8 geleitet wird. Durch die Zuführung der Brennluft mit einem großen Drall erfolgt dabei bereits eine gute Durchmischung des verdampften Brennstoffs mit Brennluft zu einem Brennstoff-Luft-Gemisch.

In dem Verjüngungsbereich 22 des Gemischaufbereitungsbereichs 2 erhöht sich aufgrund der Querschnittsverringerung die axiale Strömungsgeschwindigkeitskomponente des Brennstoff-Luft-Gemischs und entsprechend dem Gesetz von Bernoulli tritt dadurch eine Verringerung des statischen Drucks in dem Übergangsabschnitt 23 auf. An dem Übergang von dem Gemischaufbereitungsbereich 2 zu dem Umsetzungsbereich 3 erfolgt aufgrund der abrupten Querschnittserweiterung eine Aufweitung der Drallströmung des Brennstoff-Luft-Gemisches, wodurch sich die axiale Strömungsgeschwindigkeitskomponente verringert und sich in dem Zentrum des Umsetzungsbereichs 3 nahe der Längsachse L ein axialer Rückströmungsbereich ausbildet, in dem Gase entgegen der Hauptströmungsrichtung H strömen, sodass sich im Betrieb des Verdampferbrenners 100 eine gute Verankerung der Flamme in dem Umsetzungsbereich 3 ausbildet.

Die Dimensionen des Verjüngungsbereichs 22, des Übergangsabschnitts 23 und des Übergangs zu dem Umsetzungsbereich 3 sind so auf die Drallströmung des Brennstoff-Luft-Gemischs abgestimmt, dass ein Rückschlagen der Flamme aus dem Umsetzungsbereich 3 in den Gemischaufbereitungsbereich 2 zuverlässig verhindert ist. Insbesondere wird die Brennluft mit einem ausreichend großen Drall und einer ausreichend großen Strömungsgeschwindigkeit zu dem Gemischaufbereitungsbereich 2 zugeführt, damit diese Bedingung erfüllt ist.

Der Axialkörper 7 weist eine hohe thermische Leitfähigkeit auf, sodass im Betrieb des Verdampferbrenners 100 Wärme von dem in dem Umsetzungsbereich 3 stattfindenden Verbrennungsprozess zu dem Gemischaufbereitungsbereich 2 zurückgeleitet wird, um einen vorteilhaften Verdampfungsprozess des flüssigen Brennstoffs an der Verdampfungsoberfläche 8 zu erzielen.

Bei dem Verdampferbrenner 100 gemäß dem Beispiel ist ferner eine Abgasrückführung 10 zum Rückführen von Verbrennungsabgasen A in den Gemischaufbereitungsbereich 2 ausgebildet. Bei dem in Fig. 1 schematisch dargestellten Beispiel weist die Abgasrückführung 10 eine Mehrzahl von in den Gemischaufbereitungsbereich 2 mündenden Abgasaustrittsöffnungen 11 auf, durch die abströmende Verbrennungsabgase A in den Gemischaufbereitungsbereich 2 eintreten können. Bei dem dargestellten Beispiel sind die Abgasaustrittsöffnungen 11 dabei strömungstechnisch mit dem in dem Wärmetauscher 5 ausgebildeten Strömungsraum verbunden, in dem die Verbrennungsabgase A abströmen.

Die Abgasaustrittsöffnungen 11 der Abgasrückführung 10 münden in dem Übergangsabschnitt 23 des Gemischaufbereitungsbereichs 2. Aufgrund des niedrigen statischen Drucks in dem Übergangsabschnitt 23 wird dabei zuverlässig ein Teil der Verbrennungsabgase A in den Gemischaufbereitungsbereich 2 eingesaugt und dort mit dem Brennstoff-Luft-Gemisch durchmischt. Der starke Drall des in dem Übergangsabschnitt 23 strömenden Brennstoff-Luft-Gemischs führt dabei zu einer homogenen Durchmischung mit den Verbrennungsabgasen A. Diese Durchmischung von Verbrennungsabgasen A mit dem Brennstoff-Luft-Gemisch ermöglicht einen besonders schadstoffarmen Betrieb des Verdampfungsbrenners 100, bei dem insbesondere auch Emissionen von Stickoxiden niedrig gehalten werden können.

### AUSFÜHRUNGSFORM

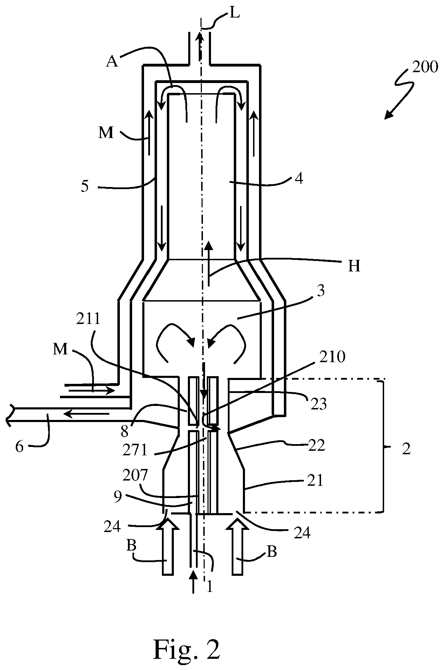

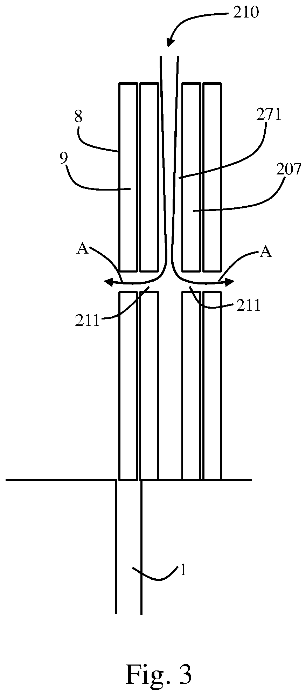

Eine Ausführungsform eines Verdampferbrenners 200 wird im Folgenden unter Bezug auf Fig. 2 und Fig. 3 eingehender beschrieben.

Der Verdampferbrenner 200 gemäß der Ausführungsform unterscheidet sich im Wesentlichen nur in der Ausgestaltung des Axialkörpers und der Abgasrückführung von dem zuvor beschriebenen nicht erfindungsgemäßen Beispiel, sodass im Folgenden zur Vermeidung von Wiederholungen nur die Unterschiede zu dem obigen Beispiel beschrieben werden und für die entsprechenden Komponenten dieselben Bezugszeichen verwendet werden.

Bei dem Verdampferbrenner 200 gemäß der Ausführungsform ist anstelle des stabförmigen massiven Axialkörpers 7 ein abgewandelter Axialkörper 207 vorgesehen. Der Axialkörper 207 gemäß der Ausführungsform weist zumindest auf seiner dem Umsetzungsbereich 3 zugewandten Seite einen inneren Hohlraum 271 auf, der gegenüber dem Umsetzungsbereich 3 offen ausgebildet ist. Insbesondere erstreckt sich der innere Hohlraum 271 von der dem Umsetzungsbereich 3 zugewandten Stirnseite des Axialkörpers 207 in der axialen Richtung zumindest bis in den Bereich des Übergangsabschnitts 23.

Bei dem Verdampferbrenner 200 ist die Abgasrückführung 210 zum Rückführen von Verbrennungsabgasen in den Gemischaufbereitungsbereich 2 derart ausgebildet, dass Verbrennungsabgase A von dem Umsetzungsbereich 3 über den inneren Hohlraum 271 in dem Axialkörper 207 in den Gemischaufbereitungsbereich 2 zurückgeführt werden. Die Abgasrückführung 210 weist eine Mehrzahl von Abgasauslassöffnungen 211 auf, die in dem Übergangsabschnitt 23 des Gemischaufbereitungsbereichs 2 münden und als Durchbrechungen in der Wandung des Axialkörpers 207 ausgebildet sind. Obwohl in Bezug auf die Ausführungsform eine Mehrzahl von Abgasauslassöffnungen beschrieben ist, kann z.B. auch lediglich eine Abgasauslassöffnung vorgesehen werden. Die Abgasauslassöffnungen 211 sind derart ausgeführt, dass sie eine Verbindung des inneren Hohlraums 271 mit dem Übergangsabschnitt 23 des Gemischaufbereitungsbereichs 2 bilden.

Bei der in den Fig. 2 und Fig. 3 schematisch dargestellten Ausführungsform ist das Verdampferelement 9 im Bereich der Abgasauslassöffnungen ebenfalls unterbrochen, sodass die Verbrennungsabgase A frei in den Übergangsabschnitt 23 ausströmen können.

Es wurde bereits unter Bezug auf das nicht erfindungsgemäße Beispiel beschrieben, dass sich aufgrund der geometrischen Ausgestaltung des Gemischaufbereitungsbereichs 2 und des Übergangs zu dem Umsetzungsbereich 3 in Kombination mit der starken Drallströmung des Brennstoff-Luft-Gemischs beim Eintritt in den Umsetzungsbereich 3 nahe der Längsachse L in dem Umsetzungsbereich 3 ein axialer Rezirkulationsbereich ausbildet, in dem die Gase in dem Umsetzungsbereich 3 entgegen der Hauptströmungsrichtung H strömen. Da der innere Hohlraum 271 des Axialkörpers 207 in dem achsnahen Bereich zu dem Umsetzungsbereich 3 hin offen ausgebildet ist, können Verbrennungsabgase A aus dem Rezirkulationsbereich in den inneren Hohlraum 271 eintreten und über den inneren Hohlraum 271 und die Abgasauslassöffnungen 211 in den Übergangsabschnitt 23 des Gemischaufbereitungsbereichs 2 zurückströmen. Durch den niedrigen statischen Druck im Bereich des Übergangsabschnitts 23 werden die Verbrennungsabgase A dabei angesaugt und mit dem in dem Übergangsabschnitt 23 strömenden Brennstoff-Luft-Gemisch durchmischt. Dabei kommt es einerseits durch den konvektiven Wärmeübergang von den rückströmenden Verbrennungsabgasen A auf den Axialkörper 207 zu einem Wärmetransport in den Gemischaufbereitungsbereich 2, wodurch die Brennstoffverdampfung verbessert wird, und andererseits zu einer Zumischung von Abgas zu dem Brennstoff-Luft-Gemisch und folglich zu einer Absenkung der Verbrennungstemperatur, da zusätzlicher inerter Ballast an der Verbrennung teilnimmt.

Obwohl bei der schematischen Darstellung in den Fig. 2 und Fig. 3 jeweils ein innerer Hohlraum 271 gezeigt ist, der sich bis zu der Stirnseite des Gemischaufbereitungsbereichs 2 im Inneren des Axialkörpers 207 erstreckt, sind auch andere Ausgestaltungen möglich, bei denen sich der innere Hohlraum 271 nicht so weit in der axialen Richtung nach hinten erstreckt.

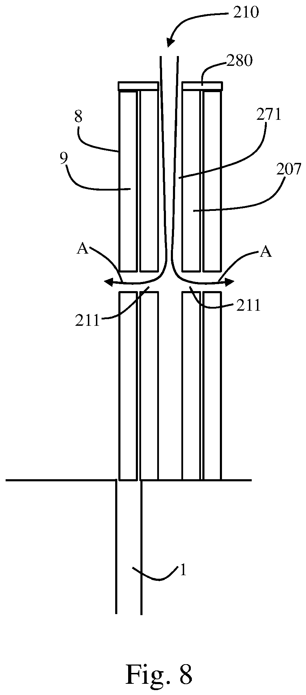

Bei einer in Fig. 8 schematisch dargestellten Abwandlung des mit Bezug auf Fig. 3 beschriebenen Axialkörpers 207, ist der Axialkörper 207 derart weitergebildet, das flüssiger Brennstoff und auch übermäßiger Brennstoffdampf nicht in an der Stirnseite des Axialkörpers 207 in der axialen Richtung austreten kann, sondern gezwungen wird, in der radialen Richtung aus dem Verdampferelement 9 auszutreten. Wie in Fig. 8 schematisch dargestellt ist, ist an der freien Stirnseite des Axialkörpers 207 eine Abdeckung 280 vorgesehen, die in der radialen Richtung von dem Außenumfang des restlichen Axialkörpers 207 hervorsteht und die freie Stirnseite des Verdampferelements 9 bedeckt. Die Abdeckung 280 ist aus einem zumindest im Wesentlichen dichten Material gebildet, sodass flüssiger Brennstoff und Brennstoffdampf nicht durch die Abdeckung 280 hindurchtreten kann, bevorzugt aus Metall, insbesondere aus temperaturbeständigem Edelstahl. Die Abdeckung 280 kann z.B. als eine separate Abdeckscheibe ausgebildet sein, die lösbar oder unlösbar an dem stirnseitigen Ende des Axialkörpers 207 befestigt ist. In einer anderen Ausgestaltung ist es z.B. auch möglich, die Abdeckung 280 einstückig mit dem Axialkörper 207 aus demselben Material herzustellen.

Aufgrund der Abdeckung 280 wird verhindert, dass Brennstoff oder Brennstoffdampf insbesondere vermehrt an dem freien Ende des Axialkörpers 207 aus dem Verdampferelement 9 austritt. In dieser Weise wird erreicht, dass der Brennstoff zumindest im Wesentlichen vollständig zur Ausbildung des Brennstoff-Luft-Gemischs in dem Gemischaufbereitungsbereich 2 zugeführt wird, sodass die Gemischaufbereitung in dem Gemischaufbereitungsbereich 2 weiter verbessert wird. Ferner wird in dieser Weise eine negative Beeinflussung der Flammenverankerung in dem Umsetzungsbereich 3 verhindert. Außerdem wird in dieser Weise verhindert, dass unverbrannter Brennstoff bzw. Brennstoffdampf in den inneren Hohlraum 271 eingesaugt wird, sodass dadurch bedingte Leistungseinbußen und eine etwaige Lebensdauerverringerung vermieden werden.

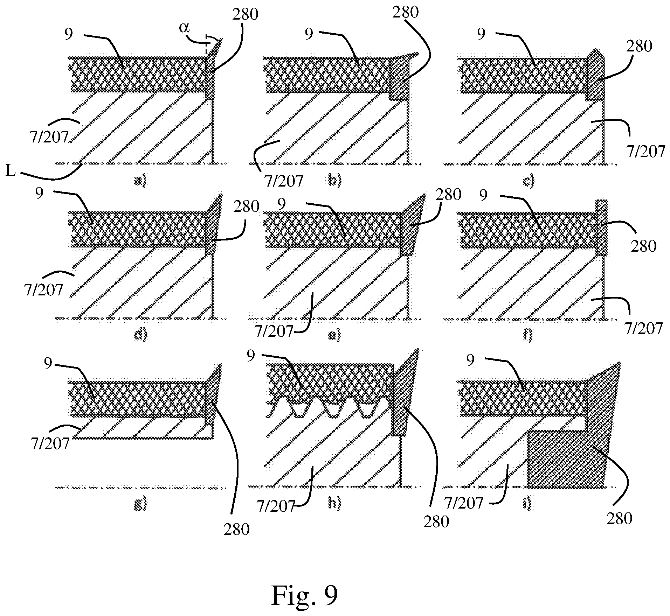

In den Fig. 9 a) bis i) sind verschiedene Weiterbildungen der Abdeckung 280 schematisch dargestellt. Auch diese Weiterbildungen der Abdeckung können jeweils sowohl bei einem im Wesentlichen massiven Axialkörper 7, wie er mit Bezug auf Fig. 1 beschrieben wurde, als auch bei einem Axialkörper 207 mit einem inneren Hohlraum, wie er in Bezug auf die Ausführungsform und deren Abwandlung beschrieben wurde, vorgesehen werden. Gemäß den in den Fig. 9 a) bis i) dargestellten Weiterbildungen der Abdeckung 280 steht die Abdeckung 280 in der radialen Richtung jeweils über den Außenumfang des Verdampferelementes 9 hervor und stellt eine zumindest im Wesentlichen scharfe Abrisskante für die entlang dem Außenumfang des Axialkörpers 7 bzw. 207 und des Verdampferelementes 9 strömende Strömung bereit. Wie in Fig. 9 a) schematisch dargestellt ist, erstreckt sich der in der radialen Richtung hervorstehende Bereich der Abdeckung 280 unter einem Winkel α zu einer Ebene die senkrecht zu der Längsachse L verläuft. Der Winkel α kann dabei - je nach der gewünschten Strömungsführung - einen Wert zwischen 0° und 90° aufweisen.

Bei der in Fig. 9 a) schematisch dargestellten Abwandlung erstreckt sich der in der radialen Richtung hervorstehende Bereich der Abdeckung 280 z.B. unter einem Winkel α im Bereich zwischen 35° und 45°, sodass die an dem Außenumfang des Verdampferelements 9 strömenden Gase dort relativ stark nach radial außen abgelenkt werden. Ferner ist bei dieser Abwandlung der hervorstehende Bereich als eine sich in der radialen Richtung verjüngende Lippe ausgebildet, die sowohl in der radialen als auch in der axialen Richtung hervorsteht. Der hervorstehende Bereich ist dabei zu dem Rest der Abdeckung 280 leicht in Richtung der Hauptströmungsrichtung H abgewinkelt ausgebildet.

Bei der in Fig. 9 b) schematisch dargestellten Abwandlung erstreckt sich der in der radialen Richtung hervorstehende Bereich der Abdeckung 280 unter einem deutlich größeren Winkel α, der zwischen 160° und 170° beträgt, sodass eine deutlich geringere radiale Ablenkung der an dem Außenumfang des Verdampferelements 9 strömenden Gase auftritt.

Bei der in Fig. 9 c) schematisch dargestellten Abwandlung erstreckt sich der in der radialen Richtung hervorstehende Bereich der Abdeckung z.B. unter einem Winkel zwischen ca. 40° und 50°. Ferner ist bei dieser Abwandlung der hervorstehende Bereich der Abdeckung 280 auch auf der von dem Verdampferelement 9 abgewandten Seite angefast bzw. abgeschrägt, um den Strömungsabriss gezielt zu beeinflussen.

Bei den in den Fig. 9 d) und 9 e) schematisch dargestellten Abwandlungen weist die Abdeckung 280 jeweils insgesamt einen eher keilförmigen Querschnitt auf, sodass der hervorstehende Bereich der Abdeckung 280 - anders als bei den Abwandlungen der Fig. 9 a) und Fig. 9 b) - nicht gegenüber dem Rest der Abdeckung 280 abgewinkelt ausgebildet ist. Wie durch einen Vergleich der Abwandlungen gemäß den Fig. 9 a) und b) und der Abwandlungen gemäß den Fig. 9 d), 9 e) und 9 i) ersichtlich ist, kann der Keilwinkel des radial hervorstehenden Bereichs der Abdeckung 280 in dieser Weise gezielt eingestellt werden.

Bei der in Fig. 9 f) schematisch dargestellten Abwandlung ist die Abdeckung 280 als eine im Wesentlichen ringförmige Scheibe an dem Ende des Axialkörpers 7/207 ausgebildet, sodass der hervorstehende Bereich der Abdeckung unter einem Winkel α von ca. 0° seitlich hervorsteht.

Obwohl nur bei der in Fig. 9 g) schematisch dargestellten Abwandlung der Axialkörper 7/207 mit einem inneren Hohlraum versehen ist, der in Richtung des Umsetzungsbereiches 3 offen ausgebildet ist, kann dies bevorzugt auch bei den anderen Abwandlungen vorgesehen sein. In diesem Fall können Gase aus dem Umsetzungsbereich 3 in das Innere des Axialkörpers 7/207 einströmen und über diesen in den Gemischaufbereitungsbereich 2 zurückgeführt werden.

In Fig. 9 h) ist beispielhaft eine Oberflächenstrukturierung des Außenumfangs des Axialkörpers 7/207 dargestellt. Eine solche kann auch bei den anderen Darstellungen gemäß den Fig. 9 a) bis g) und i) bevorzugt ebenfalls vorhanden sein. Bei der Abwandlung von Fig. 9 h) liegt die Abdeckung 280 ferner in einem radial innenliegenden Bereich unmittelbar stirnseitig an dem Verdampferelement 9 an und verläuft unter einem Winkel α von ca. 0°. Ein weiter außen liegender Bereich der Abdeckung 280 verläuft hingegen unter einem größeren Winkel α, sodass wiederum eine radial vorspringende, sich verjüngende Lippe ausgebildet ist. Ferner liegt in einem radial außenliegenden Bereich des Verdampferelements 9 die Abdeckung 280 in diesem Fall nicht unmittelbar an dem Verdampferelement 9 an. Auch diese ergänzenden Merkmale der Abwandlung von Fig. 9 h) können ferner auch bei den anderen Abwandlungen realisiert werden.

Bei der in Fig. 9 i) schematisch dargestellten Abwandlung ist die Abdeckung 280 als ein Einsatz ausgebildet, der mit einem zentralen vorspringenden Zapfen in eine stirnseitige Ausnehmung des Axialkörpers 7/207 eingesetzt ist. Bevorzugt kann auch in diesem Zapfen eine Durchbrechung zur Rückführung von Abgasen in das Innere des Axialkörpers vorgesehen sein. Auch diese weiteren Merkmale können jeweils auch bei den anderen Abwandlungen realisiert werden.

Die Ausgestaltung der Abdeckung 280 mit der beschriebenen Abrisskante hat den weiteren Vorteil, dass die Strömung an dem Eintritt in den Umsetzungsbereich 3 noch besser stabilisiert wird. Unter anderem kann in dieser Weise die Ausbildung von Pulsationen unterdrückt werden. Ferner kann ein Rückschlagen der Flamme in den Gemischaufbereitungsbereich 2 noch zuverlässiger verhindert werden. Insgesamt kann ferner durch die Abwandlungen der Abdeckung 280 mit der beschriebenen Abrisskante für die Strömung des Brennstoff-Luft-Gemischs insbesondere auch die Ausbildung des Rezirkulationsbereiches in dem Umsetzungsbereich 3 zusätzlich noch weiter stabilisiert werden.

### ABWANDLUNGEN

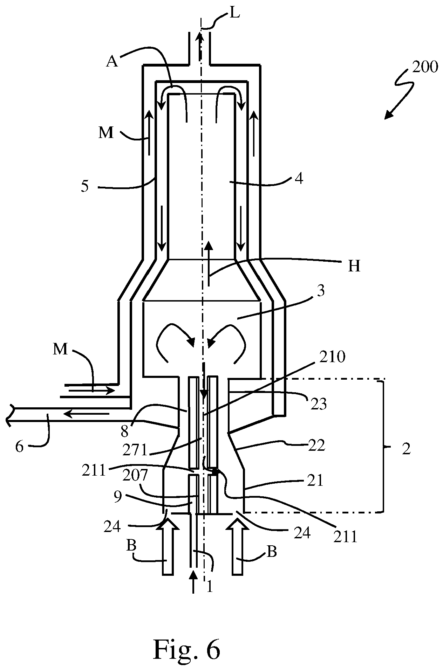

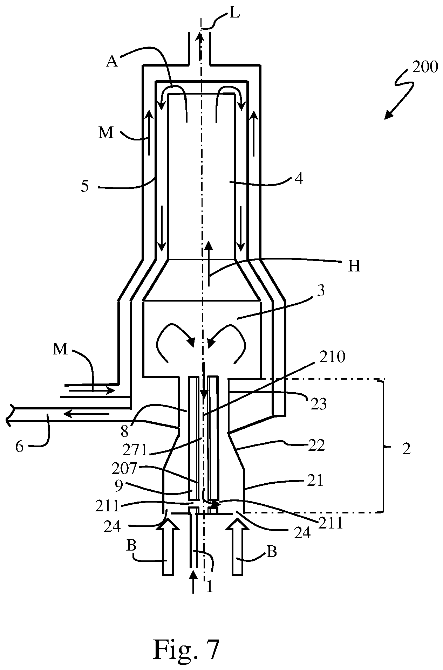

In den Fig. 6 und Fig. 7 sind Abwandlungen der zuvor beschriebenen Ausführungsform gezeigt, die sich lediglich in der Position der Abgasauslassöffnungen 211 von der zuvor beschriebenen Ausführungsform unterscheiden. Obwohl dies in den Fig. 6 und Fig. 7 nicht dargestellt ist, kann auch bei den Abwandlungen eine zuvor beschriebene zusätzliche Abdeckung 280 vorgesehen sein.

Bei der in Fig. 6 schematisch dargestellten ersten Abwandlung der Ausführungsform münden die Abgasauslassöffnungen 211 nicht in dem Übergangsabschnitt 23 des Gemischaufbereitungsbereichs 2, sondern wesentlich weiter stromaufwärts bezüglich der Hauptströmungsrichtung H, insbesondere im ersten Drittel des Gemischaufbereitungsbereichs 2. Bei der in Fig. 6 dargestellten Abwandlung münden die Abgasauslassöffnungen 211 z.B. im Bereich des Übergangs von der Hauptkammer 21 des Gemischaufbereitungsbereichs 2 zu dem Verjüngungsbereich 22. Es ist jedoch auch möglich, dass die Abgasauslassöffnungen 211 in dem Verjüngungsbereich 22 und/oder in dem Bereich der Hauptkammer 21 in den Gemischaufbereitungsbereich 2 münden.

Bei der in Fig. 7 schematisch dargestellten zweiten Abwandlung der Ausführungsform münden die Abgasauslassöffnungen 211 sogar noch weiter stromaufwärts bezüglich der Hauptströmungsrichtung in der Nähe der stromaufwärtigen Stirnseite des Gemischaufbereitungsbereichs 2, insbesondere im ersten Fünftel des Gemischaufbereitungsbereichs 2. Die Verlagerung der Abgasauslassöffnungen 211 zu einer Position näher an der stromaufwärtigen Stirnseite des Gemischaufbereitungsbereichs 2 hat den Vorteil, dass die rückgeführten Verbrennungsabgase noch zuverlässiger an dem gesamten Aufbereitungsprozess des Brennstoff-Luft-Gemisches in dem Gemischaufbereitungsbereich 2 teilnehmen.

### VERGLEICHSBEISPIEL

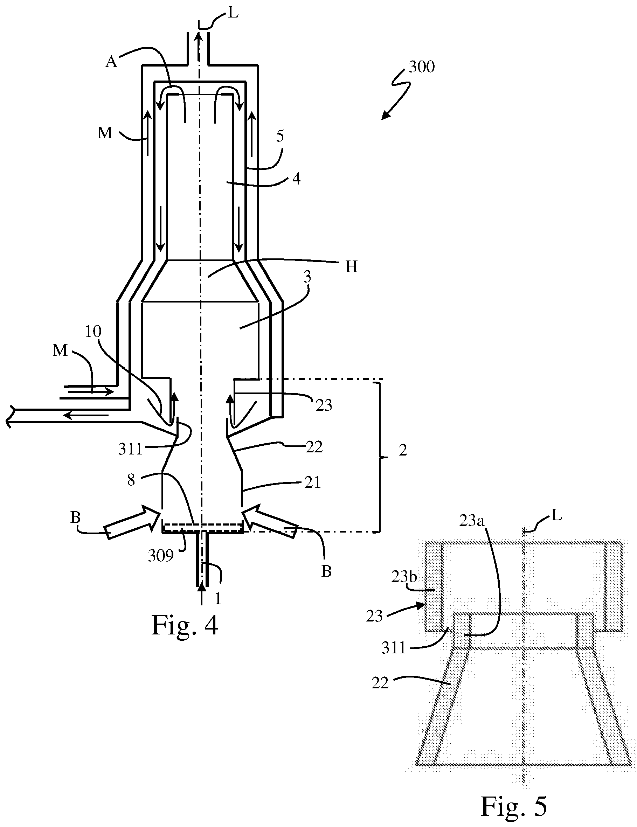

Eine weitere, nicht erfindungsgemäße Ausgestaltung eines Verdampferbrenners 300 wird im Folgenden unter Bezug auf die Fig. 4 und Fig. 5 eingehender beschrieben.

Da sich die weitere Ausgestaltung im Wesentlichen nur in der Ausgestaltung des Gemischaufbereitungsbereichs 2 von dem obigen, nicht erfindungsgemäßen ersten Beispiel unterscheidet, werden im Folgenden nur die Unterschiede zu dem ersten Beispiel genauer beschrieben und für entsprechende Komponenten werden dieselben Bezugszeichen wie bei dem ersten Beispiel verwendet.

Bei dem Verdampferbrenner 300 gemäß der weiteren Ausgestaltung ist kein die Verdampfungsoberfläche bereitstellender Axialkörper in dem Gemischaufbereitungsbereich 2 vorgesehen, sondern in einem Bereich der Stirnseite des Gemischaufbereitungsbereichs 2 ist eine im Wesentlichen topfartige Verdampferaufnahme ausgebildet, in der ein im Wesentlichen flächiges Verdampferelement 309 angeordnet ist. Das Verdampferelement 309 kann dabei insbesondere aus denselben Materialien gefertigt sein, die im Hinblick auf das Verdampferelement 9 bei dem ersten Beispiel beschrieben wurden. Auch bei dem weiteren Beispiel mündet die Brennstoffzuführung 1 an der Stirnseite des Gemischaufbereitungsbereichs 2, sodass der flüssige Brennstoff an das Verdampferelement 309 übergeben werden kann. Bei dem weiteren Beispiel ist somit die Verdampfungsoberfläche 8 in dem rückwärtigen Bereich des Gemischaufbereitungsbereichs 2 ausgebildet.

Im Unterschied zu dem ersten Beispeil, bei dem die Brennlufteintritte 24 radial außenliegend an der Stirnseite des Gemischaufbereitungsbereichs 2 angeordnet sind, sind bei dem weiteren Beispiel die Brennlufteintritte 24 in der Seitenwand des Gemischaufbereitungsbereichs 2 angeordnet, sodass die Brennluft in radialer Richtung von außen in den Gemischaufbereitungsbereich 2 eintritt. Die Brennluft kann dabei bevorzugt insbesondere auch bei dem weiteren Beispiel mit einem starken Drall beaufschlagt werden, was wiederum durch entsprechende Luftleitelemente in der Brennluftzuführung B realisiert sein kann.

Bei dem Verdampferbrenner 300 gemäß dem weiteren Beispiel ist ferner die Abgasrückführung 10 leicht gegenüber dem ersten Beispiel abgewandelt ausgebildet, wie insbesondere anhand der Fig. 5 zu sehen ist. Der Verjüngungsbereich 22 und der Übergangsabschnitt 23 sind bei dem weiteren Beispiel in Form einer gestuften Düse ausgebildet, wie in Fig. 5 vergrößert dargestellt ist. Obwohl in Fig. 5 schematisch eine bezüglich der Längsachse L rotationssymmetrische Ausgestaltung gezeigt ist, sind auch davon abweichende Ausgestaltungen möglich. Der Übergangsabschnitt 23 weist einen ersten Teilabschnitt 23a und einen zweiten Teilabschnitt 23b auf. Der erste Teilabschnitt 23a ist bei der dargestellten konkreten Ausgestaltung unmittelbar an den Verjüngungsbereich 22 anschließend ausgebildet und weist einen ersten Querschnitt auf. Der zweite Teilabschnitt 23b des Übergangsabschnitts 23 ist mit einem größeren zweiten Querschnitt ausgebildet und umgreift den ersten Teilabschnitt 23a in der Umfangsrichtung über einen Teil der axialen Erstreckung. Der erste Teilabschnitt 23a und der zweite Teilabschnitt 23b sind dabei derart bemessen, dass zwischen dem ersten Teilabschnitt 23a und dem zweiten Teilabschnitt 23b eine ringförmige Öffnung ausgebildet ist, die bei dem weiteren Beispiel als Abgasauslassöffnung 311 dient.

Bei dem weiteren Beispiel ist die Abgasrückführung 10 somit über die als Abgasauslassöffnung 311 dienende ringförmige Öffnung zwischen dem ersten Teilabschnitt 23a und dem zweiten Teilabschnitt 23b des Übergangsabschnitts 23 ausgebildet.

Obwohl bei dem weiteren Beispiel ein Verdampferbrenner 300 beschrieben wurde, bei dem kein Axialkörper in dem Gemischaufbereitungsbereich 2 angeordnet ist, ist es gemäß einer Abwandlung des weiteren Beispiels auch möglich, dass ebenfalls ein solcher Axialkörper wie bei dem ersten Beispiel oder der Ausführungsform in dem Gemischaufbereitungsbereich 2 angeordnet wird.

Ferner können die bei den verschiedenen Beispielen und Ausführungsformen angegebenen Varianten jeweils auch bei den anderen Beispielen und Ausführungsformen zum Einsatz kommen. Insbesondere kann z.B. auch bei einer Realisierung gemäß dem ersten Beispiel eine Abgasrückführung über eine gestufte Düse realisiert werden, wie es im Hinblick auf das weitere, nicht erfindungsgemäße Beispiel beschrieben wurde.

## Patentansprüche

1. Verdampferbrenner (200;) für ein mobiles, mit flüssigem Brennstoff betriebenes Heizgerät mit:
einem Gemischaufbereitungsbereich (2) zum Mischen von Brennstoff mit Brennluft zu einem Brennstoff-Luft-Gemisch,
einer Brennstoffzuführung (1) zum Zuführen flüssigen Brennstoffs zu dem Gemischaufbereitungsbereich (2),
einer Brennluftzuführung (B) zum Zuführen von Brennluft zu dem Gemischaufbereitungsbereich (2),
zumindest einer Verdampfungsoberfläche (8), der der flüssige Brennstoff zugeführt wird, zum Verdampfen des flüssigen Brennstoffs,
einem dem Gemischaufbereitungsbereich (2) strömungstechnisch nachgeordneten Umsetzungsbereich (3) zum Umsetzen des Brennstoff-Luft-Gemischs zu Verbrennungsabgasen (A) unter Freisetzung von Wärme, und
einer Abgasrückführung (210) zum Rückführen von Verbrennungsabgasen (A) in den Gemischaufbereitungsbereich (2),
**dadurch gekennzeichnet, dass**
ein Axialkörper (207) vorgesehen ist, der sich in dem Gemischaufbereitungsbereich (2) entlang einer Längsachse (L) des Verdampferbrenners beabstandet von einer Seitenwand erstreckt, und wobei der Axialkörper (207) einen inneren Hohlraum (271) aufweist, der zu dem Umsetzungsbereich (3) hin offen ist und von dem sich zumindest eine Abgasauslassöffnung (211) zu dem Gemischaufbereitungsbereich (2) erstreckt, sodass Verbrennungsabgase (A) durch den Axialkörper (207) zu dem Gemischaufbereitungsbereich (2) rückführbar sind.

2. Verdampferbrenner nach Anspruch 1, wobei die Abgasrückführung (210) zumindest eine in den Gemischaufbereitungsbereich (2) mündende Abgasauslassöffnung (211;) aufweist.

3. Verdampferbrenner nach Anspruch 1 oder 2, wobei der Gemischaufbereitungsbereich (2) einen Verjüngungsbereich (22) mit einem sich in Richtung des Umsetzungsbereichs (3) verjüngenden Querschnitt und einen sich in Richtung des Umsetzungsbereichs (3) an den Verjüngungsbereich (22) anschließenden Übergangsabschnitt (23) aufweist.

4. Verdampferbrenner nach Anspruch 3, wobei die Abgasrückführung (210) in dem Übergangsabschnitt (23) mündet.

5. Verdampferbrenner nach Anspruch 3 oder 4, wobei an einem Übergang von dem Übergangsabschnitt (23) zu dem Umsetzungsbereich (3) eine abrupte Querschnittserweiterung des Strömungsraums ausgebildet ist.

6. Verdampferbrenner nach einem der vorangehenden Ansprüche, wobei sich der Axialkörper (207) von einer Stirnseite des Gemischaufbereitungsbereichs (2) zumindest bis in einen Übergangsabschnitt (23) zu dem Umsetzungsbereich (3) erstreckt.

7. Verdampferbrenner nach einem der vorangehenden Ansprüche, wobei die Verdampfungsoberfläche (8) an einer Außenumfangsfläche des Axialkörpers (207) ausgebildet ist.

8. Verdampferbrenner nach Anspruch 7, wobei die Verdampfungsoberfläche (8) durch ein Verdampferelement (9) bereitgestellt ist und an einem dem Umsetzungsbereich (3) zugewandten Ende des Verdampferelements (9) eine Abdeckung (280) vorgesehen ist.

9. Verdampferbrenner nach Anspruch 8, wobei die Abdeckung (280) in radialer Richtung über einen Außenumfang des Verdampferelements (9) hervorsteht.

10. Fahrzeugheizgerät mit einem Verdampferbrenner (200;) nach einem der vorangehenden Ansprüche.

## Claims

1. An evaporator burner (200) for a mobile heating device operated with liquid fuel, having a mixture preparation region (2) for the mixing of fuel with combustion air to form a fuel-air mixture,
a fuel supply (1) for the supply of liquid fuel to the mixture preparation region (2),
a combustion-air supply (B) for the supply of combustion air to the mixture preparation region (2),
at least one evaporation surface (8) to which the liquid fuel is supplied for the purposes of evaporation of the liquid fuel,
a reaction region (3) which is arranged downstream of the mixture preparation region (2) in terms of flow and which serves for the reaction of the fuel-air mixture to form combustion exhaust gases (A) with a release of heat, and
an exhaust-gas recirculation arrangement (210) for the recirculation of combustion exhaust gases (A) into the mixture preparation region (2),
**characterized in that**
an axial body (207) is provided which extends in the mixture preparation region (2) along a longitudinal axis (L) of the evaporator burner so as to be spaced apart from a side wall, and wherein the axial body (207) has an internal cavity (271) which is open toward the reaction region (3) and from which at least one exhaust-gas outlet opening (211) extends to the mixture preparation region (2) such that combustion exhaust gases (A) can be recirculated through the axial body (207) to the mixture preparation region (2) .

2. The evaporator burner as claimed in claim 1, wherein the exhaust-gas recirculation arrangement (210) has at least one exhaust-gas outlet opening (211) which opens into the mixture preparation region (2).

3. The evaporator burner as claimed in claim 1 or 2, wherein the mixture preparation region (2) has a narrowing region (22) with a cross section which narrows in the direction of the reaction region (3), and a transition section (23) which adjoins the narrowing region (22) in the direction of the reaction region (3).

4. The evaporator burner as claimed in claim 3, wherein the exhaust-gas recirculation arrangement (210) opens into the transition section (23).

5. The evaporator burner as claimed in claim 3 or 4, wherein an abrupt cross-sectional widening of the flow space is formed at a transition from the transition section (23) to the reaction region (3) .

6. The evaporator burner as claimed in any one of the preceding claims, wherein the axial body (207) extends from a face side of the mixture preparation region (2) at least into a transition section (23) to the reaction region (3).

7. The evaporator burner as claimed in any one of the preceding claims, wherein the evaporation surface (8) is formed on an outer circumferential surface of the axial body (207).

8. The evaporator burner as claimed in claim 7, wherein the evaporation surface (8) is provided by an evaporator element (9) and a cover (280) is provided on an end, facing toward the reaction region (3), of the evaporator element (9).

9. The evaporator burner as claimed in claim 8, wherein the cover (280) projects in a radial direction beyond the outer circumference of the evaporator element (9).

10. A vehicle heating device having an evaporator burner (200) as claimed in one of the preceding claims.

## Revendications

1. Brûleur à vaporisation (200;) pour un appareil de chauffage mobile fonctionnant avec du combustible liquide, comprenant :
une région de préparation de mélange (2) pour mélanger du combustible avec de l'air de combustion pour obtenir un mélange de combustible et d'air,
une alimentation en combustible (1) pour l'alimentation de combustible liquide à la région de préparation de mélange (2),
une alimentation en air de combustion (B) pour alimenter de l'air de combustion à la région de préparation de mélange (2),
au moins une surface de vaporisation (8) à laquelle est acheminé le combustible liquide, pour la vaporisation du combustible liquide,
une région de réaction (3) placée en aval, du point de vue fluidique, de la région de préparation de mélange (2), pour faire réagir le mélange de combustible et d'air pour produire du gaz d'échappement de combustion (A) en libérant de la chaleur, et
une recirculation de gaz d'échappement (210) pour la recirculation de gaz d'échappement de combustion (A) dans la région de préparation de mélange (2),
**caractérisé en ce**
**qu'**il est prévu un corps axial (207) qui s'étend dans la région de préparation de mélange (2) le long d'un axe longitudinal (L) du brûleur à vaporisation à distance d'une paroi latérale, le corps axial (207) présentant une cavité interne (271) qui est ouverte vers la région de réaction (3) et depuis laquelle s'étend au moins une ouverture de sortie de gaz d'échappement (211) conduisant vers la région de préparation de mélange (2), de telle sorte que les gaz d'échappement de combustion (A) puissent être recirculés par le corps axial (207) jusqu'à la région de préparation de mélange (2).

2. Brûleur à vaporisation selon la revendication 1, dans lequel la recirculation de gaz d'échappement (210) présente au moins une ouverture de sortie de gaz d'échappement (211;) débouchant dans la région de préparation de mélange (2).

3. Brûleur à vaporisation selon la revendication 1 ou 2, dans lequel la région de préparation de mélange (2) présente une région de rétrécissement (22) avec une section transversale se rétrécissant dans la direction de la région de réaction (3) et une portion de transition (23) se raccordant à la région de rétrécissement (22) dans la direction de la région de réaction (3).

4. Brûleur à vaporisation selon la revendication 3, dans lequel la recirculation de gaz d'échappement (210) débouche dans la portion de transition (23).

5. Brûleur à vaporisation selon la revendication 3 ou 4, dans lequel un élargissement abrupt de section transversale de l'espace d'écoulement est réalisé au niveau d'une transition de la portion de transition (23) à la région de réaction (3).

6. Brûleur à vaporisation selon l'une quelconque des revendications précédentes, dans lequel le corps axial (207) s'étend depuis un côté frontal de la région de préparation de mélange (2) au moins jusque dans une portion de transition (23) jusqu'à la région de réaction (3).

7. Brûleur à vaporisation selon l'une quelconque des revendications précédentes, dans lequel la surface de vaporisation (8) est réalisée au niveau d'une surface périphérique extérieure du corps axial (207) .

8. Brûleur à vaporisation selon la revendication 7, dans lequel la surface de vaporisation (8) est fournie par un élément de vaporisation (9) et un recouvrement (280) est prévu au niveau d'une extrémité de l'élément de vaporisation (9) tournée vers la région de réaction (3).

9. Brûleur à vaporisation selon la revendication 8, dans lequel le recouvrement (280) fait saillie dans la direction radiale au-delà d'une périphérie extérieure de l'élément de vaporisation (9).

10. Appareil de chauffage d'un véhicule comprenant un brûleur à vaporisation (200;) selon l'une quelconque des revendications précédentes.
